# EUROPEAN PATENT SPECIFICATION

(11) **EP 3 823 407 B1**
(45) Date of publication and mention of the grant of the patent: **15.10.2025**
(21) Application number: 20206966.2
(22) Date of filing: 11.11.2020
(51) Int. Cl.: H04W 74/0816, H04W 72/0453

(54) **MULTI-CHANNEL MEDIUM ACCESS FOR EHT WLANS**
MEHRKANALIGER MEDIENZUGRIFF FÜR EHT-WLANS
ACCÈS À DES SUPPORTS MULTICANAUX POUR WLAN TRÈS HAUT DÉBIT

(30) Priority: 12.11.2019 US 201962934026 P
(43) Date of publication of application: 19.05.2021
(73) Proprietor: Intel Corporation, Santa Clara, CA 95054 (US)
(72) Inventor: Park, Minyoung, San Ramon, CA 94582 (US)
(74) Representative: Viering, Jentschura & Partner mbB Patent- und Rechtsanwälte

(56) References cited:
- WO-A1-2018/084034
- US-A1- 2019 045 461

## Description

### PRIORITY CLAIM

This application claims priority to United States Provisional Patent Application Serial No. 62/934,026, filed November 12, 2019 [reference number AC5386-Z2].

### TECHNICAL FIELD

Embodiments pertain to wireless communications. Some embodiments relate to wireless local area networks (WLANs). Some embodiments relate to WLAN communications in accordance with the IEEE 802.11be draft standard (i.e., Extremely High Throughput (EHT)). Some embodiments relate to latency improvement in WLANs.

### BACKGROUND

One issue with wideband transmission in legacy WLANs a reduced throughput and increased latency due to the required use of a primary channel.

US 2019/0045461 A1 concerns power reduction in a wireless network, in particular WLANs operating according to the IEEE 802.11 family of standards including IEEE 802.11 ax and IEEE 802.11 EHT. Problems in making efficient use of the network resources while operating newer and older protocols are addressed by negotiating between access points for conditional access to transmission opportunities.

WO 2018/084034 A1 relates to communication in a wireless network according to IEEE 802.11 ax. To ensure that other data units are not transmitted when one or more channels are busy with receiving a current data unit, MAC circuitry updates a Network Allocation Vector (NAV) value. This NAV value indicates the remaining duration of the current data unit. The MAC circuitry determines busy/idle state of at least one subchannel using the NAV value. In certain cases, the NAV value also includes a bandwidth field so that the NAV value indicates not only the remaining duration but the bandwidth (in subchannels) occupied by the current data unit.

### SUMMARY

The invention is an apparatus and computer-readable storage medium as defined in the appended claims.

### BRIEF DESCRIPTION OF THE DRAWINGS

FIG. 1 is an illustration of the wideband channel access problem in the current 802.11n/ac/ax.
FIG. 2 is an illustration of AP transmitting packets on a secondary channel when the primary channel is busy in accordance with some embodiments.
FIG. 3 is an illustration of STA's transmission on the secondary channels in accordance with some embodiments.
FIG. 4 is an illustration of STA's transmission being deferred until the end of intra-BSS transmission in accordance with some embodiments.
FIG. 5 is an illustration of uplink transmission using a Trigger frame in accordance with some embodiments.
FIG. 6 is a functional block diagram of a station (STA) in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

The present invention is directed to an access point station (AP) configured for operating in an extremely high-throughput (EHT) wireless local area network (WLAN) configurable to operate as a legacy AP and configurable to operate as an EHT AP. The AP operates on a plurality of channels of an operating bandwidth comprising a primary channel and one or more secondary channels. When the AP is configured to operate as an EHT AP, the AP maintains a separate network allocation vector (NAV) for each of the channels and perform packet detection simultaneously on at least two of the channels including at least one of the secondary channels to determine if any of these channels are idle or busy. For downlink transmission when the primary channel is busy, the AP encodes a physical layer conformance procedure (PLCP) protocol data unit (PPDU) for the downlink transmission to a non-AP station (STA) on one of the secondary channels when the one of the secondary channels is idle and when the NAV for the one of the secondary channels has expired, without use of the primary channel.

Current 802.11n/ac/ax amendments support 40/80/160 MHz wideband transmission. However, a wideband transmission always needs to include the primary 20 MHz channel and if the primary 20 MHz channel is busy, a STA cannot transmit any wideband signal nor on any idle secondary channels.

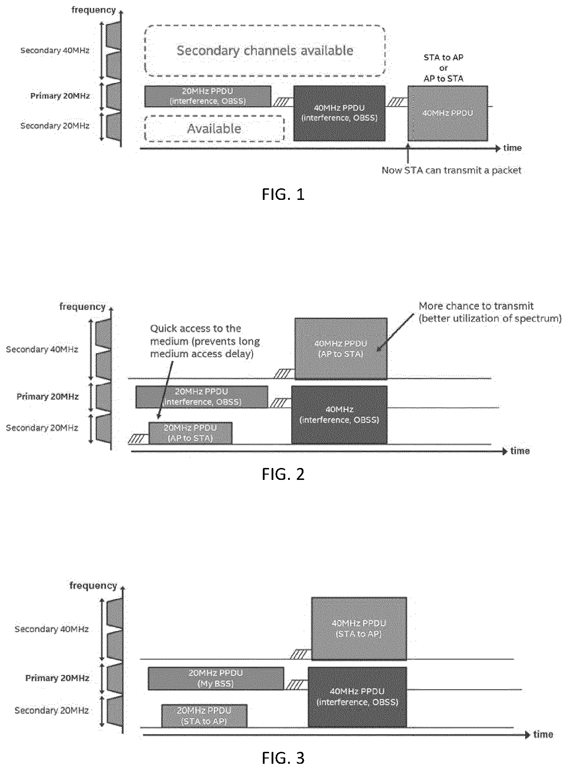

FIG. 1 illustrates this problem. Although the secondary 20 MHz and the secondary 40 MHz are idle, because the primary 20 MHz channel is busy, a STA has to wait until the primary 20 MHz channel becomes idle. This may degrade throughput and increase latency.

Embodiments disclosed herein remove the primary 20 MHz channel requirement for a wideband transmission (e.g. 40/80/160 MHz and 320MHz in EHT) and allow a STA to transmit a packet on any idle channel within the operating bandwidth of the BSS by enabling packet decoding capability on each 20 MHz channel within the operating bandwidth. These embodiments help address the problem of the wideband channel access of 802.11n/ac/ax and potentially in EHT. By adding a packet decoding or detection capability on each 20 MHz channel and tracking NAV of each 20 MHz channel, a STA can transmit a packet on any idle channel even when the primary channel is busy. These embodiments provide improved throughput and reduced latency (i.e. enhance QoS).

In accordance with some embodiments, an AP and a STA listen to each 20 MHz channel of the operation bandwidth. This may require additional decoding or packet detection capability per 20 MHz channel. For example, if the operation bandwidth is 80 MHz, the AP listens to four 20 MHz channels simultaneously. The AP maintains separate NAV on each 20 MHz channel.

In accordance with the invention, a STA or an AP listens to a fewer number of 20 MHz channels within the operation bandwidth to reduce the complexity. For example, a STA may listen to two 20 MHz channels out of four. In this case, the AP and the STA need to exchange information about the channels they are listening to and a STA/AP transmits on those two channels instead of four.

In some of these embodiments, when an AP has a packet to transmit, the AP senses each 20 MHz channel to find an idle channel. If there is any idle channel within the operation bandwidth and the NAV of the channel has expired, the AP transmits the packet on the idle channel even if it is a secondary channel. This is illustrated in FIG. 2.

In some embodiments, if the AP detects a packet on any channel within the operation bandwidth, the AP decodes the preamble of the packet to see if it is from its own BSS or from overlapping BSS (OBSS). This may be done based on the BSS color information in the preamble of the packet. If the packet is from its own BSS, it continues to decode the packet. Otherwise, it stops decoding on that channel, updates the NAV of the channel, and continue listening to the other channels.

In some embodiments, a STA is capable of detecting a packet on each 20 MHz channel within the operation bandwidth and listens to the channels within the operation bandwidth. If the STA detects a packet on any 20 MHz channel, it starts to decode the packet (Length of PPDU, BSS color, Duration, Receiver Address) and checks if the packet is destined for the STA. If the packet is destined for the STA, it decodes the rest of the packet. If the packet is for another STA or from OBSS, it stops decoding the packet, updates the NAV of the channel, and continue listening to the other idle channels within the operation bandwidth. This scenario is illustrated in FIG. 2.

In some embodiments, when a STA has a packet to transmit, the STA senses each 20 MHz channel to find an idle channel. The STA transmits a packet on any idle channel within the operation bandwidth even if the idle channel is a secondary channel. The transmission may need to end before the end of a transmission by a STA in its own BSS to avoid overlapping Tx/Rx on the AP side. This is illustrated in FIG. 3.

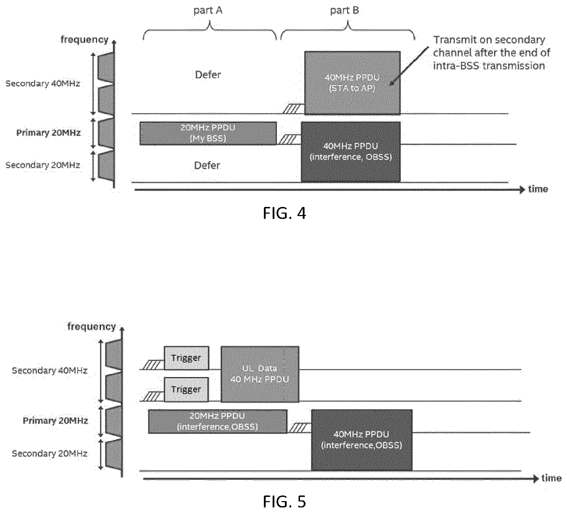

In some alternate embodiments, to avoid the overlapping Tx/Rx on adjacent channels at the AP, when a channel is busy and a packet received on the channel is from its own BSS (based on the transmitter address or BSS color), the STA defers its transmission until the end of the Duration of the packet even if there is an idle channel within the operation bandwidth. This is illustrated in FIG. 4 - part A. On the other hand, if a received packet on a channel is from OBSS, the STA transmits a packet on any idle channel within the operation bandwidth even if the idle channel is a secondary channel. This is illustrated in FIG. 4 - part B.

In some alternate embodiments, a STA may wait for a Trigger frame for an uplink transmission as shown in FIG. 5 so that the STA doesn't need to track the NAV of each channel or complication of the overlapping Tx/Rx on adjacent channels.

In some embodiments, a physical layer protocol data unit may be a physical layer conformance procedure (PLCP) protocol data unit (PPDU). In some embodiments, the AP and STAs may communicate in accordance with one of the IEEE 802.11 standards, specifically including IEEE draft specification IEEE P802.11ax/D4.0, February 2019.

The present invention is directed to an apparatus of an access point station (AP) configured for operating in an extremely high-throughput (EHT) wireless local area network (WLAN). The apparatus comprises processing circuitry and memory. The AP may be configurable by the processing circuitry to operate as a legacy AP and configurable by the processing circuitry to operate as an EHT AP. The processing circuitry configures the AP for operation on a plurality of channels of an operating bandwidth. The channels comprise a primary channel and one or more secondary channels. In the present invention , when the AP is configured to operate as an EHT AP, the processing circuitry maintains a separate network allocation vector (NAV) for each of the channels of the plurality and perform packet detection simultaneously on at least two of the channels including at least one of the secondary channels to determine if any of these channels are idle or busy. For downlink transmission when the primary channel is busy, the processing circuitry encodes a physical layer conformance procedure (PLCP) protocol data unit (PPDU) for the downlink transmission to a non-AP station (STA) on one of the secondary channels when the one of the secondary channels is idle and when the NAV for the one of the secondary channels has expired, without use of the primary channel. In the present invention, the memory may store the separate NAV for each of the channels.

In some embodiments, when the AP is configured to operate as an EHT AP and for receipt of an uplink transmission, the processing circuitry is to encode a trigger frame for transmission to the STA on one or more of the secondary channels when the one or more of the secondary channels is idle and when the NAV for the one or more of the secondary channels has expired without use of the primary channel. In some embodiments, the trigger frame may trigger the uplink transmission by the STA on the one or more of the secondary channels. An example of these embodiments is illustrated in FIG. 5.

In the present invention, when the AP performs packet detection simultaneously on at least two of the channels and when the at least two of the channels are less than all channels of the operating bandwidth, the processing circuitry generates signalling for transmission to the STA to identify which of the secondary channels that the PPDU is to be received without use of the primary channel.

In some embodiments, the processing circuitry may further configure the AP to perform packet detection simultaneously on at least two secondary channels and may generate signalling for transmission to the STA to indicate that transmission of the PPDU is to be expected on one or more secondary channels without use of the primary channel.

In some embodiments, the processing circuitry may defer a transmission on a secondary channel until an end an intra-BSS transmission detected on the primary channel and refrain from deferring a transmission on a secondary channel when an inter-BSS transmission (i.e., a transmission of an OBSS) is detected on the primary channel. An example of these embodiments is illustrated in FIG. 4.

In some embodiments, when the transmission detected on the primary channel is an intra-BSS transmission (i.e., a transmission from the BSS of the AP), the processing circuitry may limit a duration of the PPDU until an end of a duration of the intra-BSS transmission. These embodiments may help avoid possible overlap with the APs own BSS. An example of these embodiments is illustrated in FIG. 3.

In some embodiments, upon detection of a packet on any one of the channels for which packet detection is being performed, the processing circuitry may initiate decoding of the packet to determine if the packet is from a basic service set (BSS) of the AP (i.e., an intra-BSS transmission) or from an overlapping BSS (OBSS) (i.e., an inter-BSS transmission. In these embodiments, the processing circuitry may update the NAV for a channel when the packet is from the OBSS (i.e., an inter-BSS transmission) and stop decoding the packet and identify the channel as busy. In some embodiments, the processing circuitry may continue to decode the packet if the packet is from the BSS of the AP and identify the channel as busy and continue to perform packet detection for the other channels for which packet detection is being performed.

In some embodiments, when the AP is configured to operate as a legacy AP (i.e., in accordance a legacy IEEE 802.11 standard such as IEEE 802.11ax), the processing circuitry may perform packet detection simultaneously on the primary channel and at least one of the secondary channels. In these embodiments, the processing circuitry may encode the PPDU for the downlink transmission to the STA on the primary channel and up to one or more of the secondary channels when the primary channel is idle and the up to one or more of the secondary channels is idle. In these embodiments, the processing circuitry may refrain from transmitting the PPDU on any of the secondary channels without use of the primary channel.

In some embodiments, the primary channel may be a 20 MHz channel and the one or more secondary channels may comprise 20 MHz channels and 40 MHz channels. In some of these embodiments, the 40 MHz channels may comprise two adjacent 20 MHz secondary channels.

In some embodiments, when operating as an EHT AP, for a downlink transmission of a 40 MHz PPDU, the processing circuitry may encode the 40 MHz PPDU for transmission on two adjacent 20 MHz secondary channels without use of the primary channel. In some embodiments, when operating as a legacy AP, for a downlink transmission of a 40 MHz PPDU, the processing circuitry may encode the 40 MHz PPDU for transmission on two adjacent 20 MHz comprising the primary channel and a secondary channel.

The present invention is directed to a non-transitory computer-readable storage medium that stores instructions for execution by processing circuitry of an access point station (AP) configured for operating in an extremely high-throughput (EHT) wireless local area network (WLAN).

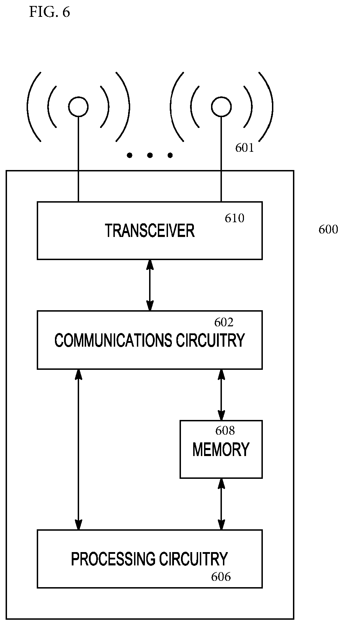

FIG. 6 is a functional block diagram of a communication station (STA) in accordance with some embodiments. In one embodiment, FIG. 6 illustrates a functional block diagram of a communication station that may be suitable for use as an AP STA or non-AP STA in accordance with some embodiments. The communication station 600 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 600 may include communications circuitry 602 and a transceiver 610 for transmitting and receiving signals to and from other communication stations using one or more antennas 601. The communications circuitry 602 may include circuitry that can operate the physical layer (PHY) communications and/or medium access control (MAC) communications for controlling access to the wireless medium, and/or any other communications layers for transmitting and receiving signals. The communication station 600 may also include processing circuitry 606 and memory 608 arranged to perform the operations described herein. In some embodiments, the communications circuitry 602 and the processing circuitry 606 may be configured to perform operations detailed in the above figures, diagrams, and flows.

In accordance with some embodiments, the communications circuitry 602 may be arranged to contend for a wireless medium and configure frames or packets for communicating over the wireless medium. The communications circuitry 602 may be arranged to transmit and receive signals. The communications circuitry 602 may also include circuitry for modulation/demodulation, upconversion/downconversion, filtering, amplification, etc. In some embodiments, the processing circuitry 606 of the communication station 600 may include one or more processors. In other embodiments, two or more antennas 601 may be coupled to the communications circuitry 602 arranged for sending and receiving signals. The memory 608 may store information for configuring the processing circuitry 606 to perform operations for configuring and transmitting message frames and performing the various operations described herein. The memory 608 may include any type of memory, including non-transitory memory, for storing information in a form readable by a machine (e.g., a computer). For example, the memory 608 may include a computer-readable storage device, read-only memory (ROM), random-access memory (RAM), magnetic disk storage media, optical storage media, flash-memory devices and other storage devices and media.

In some embodiments, the communication station 600 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 600 may include one or more antennas 601. The antennas 601 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 600 may include one or more of a keyboard, a display, a non-volatile memory port, multiple antennas, a graphics processor, an application processor, speakers, and other mobile device elements. The display may be an LCD screen including a touch screen.

Although the communication station 600 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 600 may refer to one or more processes operating on one or more processing elements.

The Abstract is provided to c allow the reader to ascertain the nature of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus of an access point station, AP, configured for operating in an extremely high-throughput, EHT, wireless local area network, WLAN, the apparatus comprising:
processing circuitry (606), and memory (608), the AP configurable by the processing circuitry to operate as a legacy AP and configurable by the processing circuitry to operate as an EHT AP;
the processing circuitry to configure the AP for operation on a plurality of channels of an operating bandwidth, the channels comprising a primary channel and one or more secondary channels;
wherein, when the AP is configured to operate as an EHT AP, the processing circuitry is to:
maintain a separate network allocation vector, NAV, for each of the channels of the plurality;
perform packet detection simultaneously on at least two of the channels including at least one of the secondary channels to determine whether each of said at least two channels are idle or busy, wherein the at least two of the channels are less than all channels of the operating bandwidth; and
for downlink transmission when the primary channel is busy, encode a physical layer conformance procedure, PLCP, protocol data unit, PPDU, and causing the PLCP PPDU to be transmitted in the downlink to a non-AP station, STA, on one of the secondary channels upon which packet detection was performed when said one of the secondary channels is idle and when the NAV for the one of the secondary channels has expired, without use of the primary channel, the non-AP STA being configured to operate on the plurality of channels of the operating bandwidth of the AP, wherein the processing circuitry is further configured to generate signalling for transmission to the STA to identify which of the secondary channels that the PPDU is to be received without use of the primary channel; and
the memory to store the separate NAV for each of the channels.

2. The apparatus of claim 1, wherein when the AP is configured to operate as an EHT AP and for receipt of an uplink transmission, the processing circuitry is to encode a trigger frame for transmission to the STA on one or more of the secondary channels when the one or more of the secondary channels is idle and when the NAV for the one or more of the secondary channels has expired without use of the primary channel, the trigger frame to trigger the uplink transmission by the STA on the one or more of the secondary channels.

3. The apparatus of claim 1 or claim 2, wherein the processing circuitry is to further configure the AP to:
perform packet detection simultaneously on at least two secondary channels; and
generate signalling for transmission to the STA to indicate that transmission of the PPDU is to be expected on one or more secondary channels without use of the primary channel.

4. The apparatus of any one of claims 1 to 3, wherein the processing circuitry is further configured to:
defer a transmission on a secondary channel until an end of an intra-BSS transmission detected on the primary channel; and
refrain from deferring a transmission on a secondary channel when an inter-BSS transmission is detected on the primary channel.

5. The apparatus of claim 4, wherein when the transmission detected on the primary channel is an intra-BSS transmission, the processing circuitry is configured to limit a duration of the PPDU until an end of a duration of the intra-BSS transmission.

6. The apparatus of any one of the preceding claims, wherein upon detection of a packet on any one of the channels for which packet detection is being performed, the processing circuitry is configured to:
initiate decoding of the packet to determine if the packet is from a basic service set, BSS, of the AP or from an overlapping BSS, OBSS;
update the NAV for a channel when the packet is from the OBSS and identify the channel as busy;
continue to decode the packet if the packet is from the BSS of the AP and identify the channel as busy; and
continue to perform packet detection for the other channels for which packet detection is being performed.

7. The apparatus of claim 4, wherein, when the AP is configured to operate as a legacy AP, the processing circuitry is configured to:
perform packet detection simultaneously on the primary channel and at least one of the secondary channels;
encode the PPDU for the downlink transmission to the STA on the primary channel and up to one or more of the secondary channels when the primary channel is idle and the up to one or more of the secondary channels is idle; and
refrain from transmitting the PPDU on any of the secondary channels without use of the primary channel.

8. The apparatus of any one of the preceding claims, wherein the primary channel is a 20 MHz channel, and the one or more secondary channels comprise 20 MHz channels and 40 MHz channels, the 40 MHz channels comprising two adjacent 20 MHz secondary channels.

9. The apparatus of claim 7, wherein, when operating as an EHT AP, for a downlink transmission of a 40 MHz PPDU, the processing circuitry is configured to encode the 40 MHz PPDU for transmission on two adj acent 20 MHz secondary channels without use of the primary channel; and
wherein, when operating as a legacy AP, for a downlink transmission of a 40 MHz PPDU, the processing circuitry is configured to encode the 40 MHz PPDU for transmission on two adjacent 20 MHz comprising the primary channel and a secondary channel.

10. A computer-readable storage medium that carries instructions for execution by processing circuitry of an access point station, AP, configured for operating in an extremely high-throughput, EHT, wireless local area network, WLAN, the AP configurable by the processing circuitry to operate as a legacy AP and configurable by the processing circuitry to operate as an EHT AP;
the processing circuitry to configure the AP for operation on a plurality of channels of an operating bandwidth, the channels comprising a primary channel and one or more secondary channels;
wherein when the AP is configured to operate as an EHT AP, the processing circuitry is to:
maintain a separate network allocation vector, NAV, for each of the channels of the plurality;
perform packet detection simultaneously on at least two of the channels including at least one of the secondary channels to determine whether each of said at least two channels are idle or busy, wherein the at least two of the channels are less than all channels of the operating bandwidth; and
for downlink transmission when the primary channel is busy, encode a physical layer conformance procedure, PLCP, protocol data unit, PPDU, and causing the PLCP PPDU to be transmitted in the downlink to a non-AP station, STA, on one of the secondary channels upon which packet detection was performed when said one of the secondary channels is idle and when the NAV for the one of the secondary channels has expired, without use of the primary channel, the non-AP STA being configured to operate on the plurality of channels of the operating bandwidth of the AP, wherein the processing circuitry is further configured to generate signalling for transmission to the STA to identify which of the secondary channels that the PPDU is to be received without use of the primary channel.

11. The computer-readable storage medium of claim 10, wherein when the AP is configured to operate as an EHT AP and for receipt of an uplink transmission, the processing circuitry is to encode a trigger frame for transmission to the STA on one or more of the secondary channels when the one or more of the secondary channels is idle and when the NAV for the one or more of the secondary channels has expired without use of the primary channel, the trigger frame to trigger the uplink transmission by the STA on the one or more of the secondary channels.

12. The computer-readable storage medium of claim 10 or claim 11, wherein the processing circuitry is to further configure the AP to:
perform packet detection simultaneously on at least two secondary channels; and generate signalling for transmission to the STA to indicate that transmission of the PPDU is to be expected on one or more secondary channels without use of the primary channel.

13. The computer-readable storage medium of any one of claims 10 to 12, wherein the processing circuitry is further configured to:
defer a transmission on a secondary channel until an end an intra-BSS transmission detected on the primary channel; and
refrain from deferring a transmission on a secondary channel when an inter-BSS transmission is detected on the primary channel, and
wherein when the transmission detected on the primary channel is an intra-BSS transmission, the processing circuitry is configured to limit a duration of the PPDU until an end of a duration of the intra-BSS transmission.

## Patentansprüche

1. Vorrichtung einer Zugangspunktstation (AP), die für den Betrieb in einem drahtlosen lokalen Netzwerk (WLAN) mit extrem hohem Durchsatz (EHT) ausgebildet ist, wobei die Vorrichtung Folgendes umfasst:
eine Verarbeitungsschaltung (606) und einen Speicher (608), wobei der AP durch die Verarbeitungsschaltung konfigurierbar ist, um als ein Legacy-AP zu arbeiten, und durch die Verarbeitungsschaltung konfigurierbar ist, um als ein EHT-AP zu arbeiten;
die Verarbeitungsschaltung zum Konfigurieren des AP für den Betrieb auf mehreren Kanälen einer Betriebsbandbreite, wobei die Kanäle einen Primärkanal und einen oder mehrere Sekundärkanäle umfassen;
wobei, wenn der AP dazu ausgebildet ist, als ein EHT-AP zu arbeiten, die Verarbeitungsschaltung für Folgendes ausgebildet ist:
Pflegen eines separaten Netzwerkzuweisungsvektors (NAV) für jeden der Kanäle der Vielzahl;
Durchführen einer Paketdetektion gleichzeitig an mindestens zwei der Kanäle, die mindestens einen der Sekundärkanäle beinhalten, um zu bestimmen, ob jeder der mindestens zwei Kanäle inaktiv oder belegt ist, wobei die mindestens zwei der Kanäle kleiner als alle Kanäle der Betriebsbandbreite sind; und
für die Downlink-Übertragung, wenn der Primärkanal belegt ist, eine Konformitätsprozedur der Bitübertragungsschicht (PLCP) Protokolldateneinheit (PPDU) codieren und veranlassen, dass die PLCP PPDU in der Downlink zu einer Nicht-AP-Station (STA) auf einem der Sekundärkanäle übertragen wird, auf dem die Paketdetektion durchgeführt wurde, wenn der eine der Sekundärkanäle frei ist und wenn der NAV für den einen der Sekundärkanäle abgelaufen ist, ohne Verwendung des Primärkanals, wobei die Nicht-AP-Station so ausgebildet ist, dass sie auf der Vielzahl von Kanälen der Betriebsbandbreite des AP betrieben wird, wobei die Verarbeitungsschaltung ferner so ausgebildet ist, dass sie eine Signalisierung zur Übertragung an die STA erzeugt, um zu identifizieren, welcher der Sekundärkanäle die PPDU ohne Verwendung des Primärkanals empfangen soll; und
den Speicher zum Speichern des separaten NAV für jeden der Kanäle.

2. Vorrichtung nach Anspruch 1, wobei, wenn der AP dazu ausgebildet ist, als ein EHT-AP zu arbeiten und für den Empfang einer Uplink-Übertragung zu empfangen, die Verarbeitungsschaltung dazu ausgebildet ist, einen Trigger-Frame zur Übertragung an die STA auf einem oder mehreren der sekundären Kanäle zu codieren, wenn der eine oder die mehreren der sekundären Kanäle inaktiv sind und wenn der NAV für den einen oder die mehreren der sekundären Kanäle ohne Verwendung des primären Kanals abgelaufen ist, wobei der Trigger-Frame die Uplink-Übertragung durch die STA auf dem einen oder den mehreren der sekundären Kanäle auslöst.

3. Vorrichtung nach Anspruch 1 oder Anspruch 2, wobei die Verarbeitungsschaltung den AP ferner für Folgendes konfigurieren soll:
Durchführen einer Paketdetektion gleichzeitig auf mindestens zwei sekundären Kanälen; und
Erzeugen einer Signalisierung zur Übertragung an die STA, um anzugeben, dass eine Übertragung der PPDU auf einem oder mehreren Sekundärkanälen ohne Verwendung des Primärkanals zu erwarten ist.

4. Vorrichtung nach einem der Ansprüche 1 bis 3, wobei die Verarbeitungsschaltung ferner für Folgendes ausgebildet ist:
Verschieben einer Übertragung auf einem Sekundärkanal bis zu einem Ende einer Intra-BSS-Übertragung, die auf dem Primärkanal detektiert wird; und
Unterlassen, eine Übertragung auf einem Sekundärkanal aufzuschieben, wenn eine Inter-BSS-Übertragung auf dem Primärkanal detektiert wird.

5. Vorrichtung nach Anspruch 4, wobei, wenn die auf dem Primärkanal detektierte Übertragung eine Intra-BSS-Übertragung ist, die Verarbeitungsschaltung dazu ausgelegt ist, eine Dauer der PPDU bis zu einem Ende einer Dauer der Intra-BSS-Übertragung zu begrenzen.

6. Vorrichtung nach einem der vorhergehenden Ansprüche, wobei bei Erkennung eines Pakets auf einem beliebigen der Kanäle, für die eine Paketdetektion durchgeführt wird, die Verarbeitungsschaltung für Folgendes ausgebildet ist:
Initiieren einer Decodierung des Pakets, um zu bestimmen, ob das Paket von einem Basisdienstsatz (BSS) des AP oder von einem überlappenden BSS (OBSS) stammt;
Aktualisieren des NAV für einen Kanal, wenn das Paket von dem OBSS stammt, und Identifizieren des Kanals als besetzt;
Fortfahren mit dem Decodieren des Pakets, falls das Paket von dem BSS des AP stammt, und Identifizieren des Kanals als besetzt; und
Fortfahren mit dem Durchführen einer Paketdetektion für die anderen Kanäle, für die eine Paketdetektion durchgeführt wird.

7. Vorrichtung nach Anspruch 4, wobei, wenn der AP für den Betrieb als Legacy-AP konfiguriert ist, die Verarbeitungsschaltung für Folgendes ausgebildet ist:
Durchführen einer Paketdetektion gleichzeitig auf dem Primärkanal und mindestens einem der Sekundärkanäle;
Codieren der PPDU für die Downlink-Übertragung an die STA auf dem Primärkanal und bis zu einem oder mehreren der Sekundärkanäle, wenn der Primärkanal im Leerlauf ist und der bis zu einem oder mehreren der Sekundärkanäle im Leerlauf sind; und
Unterlassen des Übertragen der PPDU auf einem beliebigen der Sekundärkanäle ohne Verwendung des Primärkanals.

8. Vorrichtung nach einem der vorhergehenden Ansprüche, wobei der Primärkanal ein 20-MHz-Kanal ist und der eine oder die mehreren Sekundärkanäle 20-MHz-Kanäle und 40-MHz-Kanäle umfassen, wobei die 40-MHz-Kanäle zwei benachbarte 20-MHz-Sekundärkanäle umfassen.

9. Vorrichtung nach Anspruch 7, wobei, wenn sie als EHT AP betrieben wird, für eine Downlink-Übertragung einer 40-MHz-PPDU die Verarbeitungsschaltung so ausgebildet ist, dass sie die 40-MHz-PPDU zur Übertragung auf zwei benachbarten 20-MHz-Sekundärkanälen ohne Verwendung des Primärkanals codiert; und
wobei, wenn sie als ein Legacy-AP arbeitet, für eine Downlink-Übertragung einer 40-MHz-PPDU die Verarbeitungsschaltung dazu ausgelegt ist, die 40-MHz-PPDU zur Übertragung auf zwei benachbarten 20 MHz zu codieren, die den Primärkanal und einen Sekundärkanal umfassen.

10. Computerlesbares Speichermedium, das Anweisungen zur Ausführung durch eine Verarbeitungsschaltung einer Zugangspunktstation (AP) enthält, die für den Betrieb in einem drahtlosen lokalen Netzwerk (WLAN) mit extrem hohem Durchsatz (EHT) ausgebildet ist, wobei die AP durch die Verarbeitungsschaltung so konfigurierbar ist, dass sie als Legacy-AP arbeitet, und durch die Verarbeitungsschaltung so konfigurierbar ist, dass sie als EHT-AP arbeitet;
die Verarbeitungsschaltung zum Konfigurieren des AP für den Betrieb auf mehreren Kanälen einer Betriebsbandbreite, wobei die Kanäle einen Primärkanal und einen oder mehrere Sekundärkanäle umfassen;
wobei, wenn der AP dazu ausgelegt ist, als ein EHT-AP zu arbeiten, die Verarbeitungsschaltung für Folgendes ausgebildet ist:
Pflegen eines separaten Netzwerkzuweisungsvektors (NAV) für jeden der Kanäle der Vielzahl;
Durchführen einer Paketdetektion gleichzeitig an mindestens zwei der Kanäle, die mindestens einen der Sekundärkanäle beinhalten, um zu bestimmen, ob jeder der mindestens zwei Kanäle inaktiv oder belegt ist, wobei die mindestens zwei der Kanäle kleiner als alle Kanäle der Betriebsbandbreite sind; und
für die Downlink-Übertragung, wenn der Primärkanal belegt ist, eine Konformitätsprozedur der Bitübertragungsschicht (PLCP) Protokolldateneinheit (PPDU) codieren und veranlassen, dass die PLCP PPDU in der Downlink zu einer Nicht-AP-Station (STA) auf einem der Sekundärkanäle übertragen wird, auf dem die Paketdetektion durchgeführt wurde, wenn der eine der Sekundärkanäle frei ist und wenn der NAV für den einen der Sekundärkanäle abgelaufen ist, ohne Verwendung des Primärkanals, wobei die Nicht-AP-Station so ausgebildet ist, dass sie auf der Vielzahl von Kanälen der Betriebsbandbreite des AP betrieben wird, wobei die Verarbeitungsschaltung ferner so ausgebildet ist, dass sie eine Signalisierung zur Übertragung an die STA erzeugt, um zu identifizieren, welcher der Sekundärkanäle die PPDU ohne Verwendung des Primärkanals empfangen soll.

11. Computerlesbares Speichermedium nach Anspruch 10, wobei, wenn der AP für den Betrieb als EHT-AP und für den Empfang einer Uplink-Übertragung ausgebildet ist, die Verarbeitungsschaltung einen Trigger-Frame für die Übertragung an die STA auf einem oder mehreren der Sekundärkanäle codiert, wenn der eine oder die mehreren Sekundärkanäle inaktiv sind und wenn der NAV für den einen oder die mehreren Sekundärkanäle ohne Verwendung des Primärkanals abgelaufen ist, der Trigger-Frame die Uplink-Übertragung durch die STA auf dem einen oder den mehreren Sekundärkanälen auslöst.

12. Computerlesbares Speichermedium nach Anspruch 10 oder Anspruch 11, wobei die Verarbeitungsschaltung ferner dazu dient, den AP für Folgendes zu konfigurieren:
Durchführen einer Paketdetektion gleichzeitig auf mindestens zwei Sekundärkanälen; und Erzeugen einer Signalisierung zur Übertragung an die STA, um anzugeben, dass eine Übertragung der PPDU auf einem oder mehreren Sekundärkanälen ohne Verwendung des Primärkanals zu erwarten ist.

13. Computerlesbares Speichermedium nach einem der Ansprüche 10 bis 12, wobei die Verarbeitungsschaltung ferner für Folgendes ausgebildet ist:
Verschieben einer Übertragung auf einem Sekundärkanal, bis zu einem Ende einer Intra-BSS-Übertragung, die auf dem Primärkanal detektiert wird; und
Unterlassen, eine Übertragung auf einem Sekundärkanal aufzuschieben, wenn eine Inter-BSS-Übertragung auf dem Primärkanal detektiert wird, und
wobei, wenn die auf dem Primärkanal detektierte Übertragung eine Intra-BSS-Übertragung ist, die Verarbeitungsschaltung dazu ausgebildet ist, eine Dauer der PPDU bis zu einem Ende einer Dauer der Intra-BSS-Übertragung zu begrenzen.

## Revendications

1. Appareil d'une station de point d'accès, AP, configuré pour fonctionner dans un réseau local sans fil, WLAN, à très haut débit, EHT, l'appareil comprenant :
des circuits de traitement (606) et une mémoire (608), l'AP pouvant être configuré par les circuits de traitement pour fonctionner comme un AP traditionnel et pouvant être configuré par les circuits de traitement pour fonctionner comme un AP EHT ;
les circuits de traitement étant destinés à configurer l'AP pour un fonctionnement sur une pluralité de canaux d'une bande passante de fonctionnement, les canaux comprenant un canal primaire et un ou plusieurs canaux secondaires ;
où, lorsque l'AP est configuré pour fonctionner comme un point d'accès EHT, les circuits de traitement sont destinés à :
maintenir un vecteur d'allocation de réseau séparé, NAV, pour chacun des canaux de la pluralité de canaux ;
effectuer une détection de paquets simultanément sur au moins deux des canaux comprenant au moins l'un des canaux secondaires afin de déterminer si chacun desdits au moins deux canaux sont inactifs ou occupés, où les au moins deux canaux sont inférieurs à tous les canaux de la bande passante de fonctionnement ; et
pour la transmission en liaison descendante lorsque le canal primaire est occupé, coder une unité de données de protocole, PPDU, de procédure de conformité de couche physique, PLCP, et amener la PLCP PPDU à être transmise dans la liaison descendante à une station, STA, non AP, sur l'un des canaux secondaires sur lequel la détection de paquets a été effectuée lorsque ledit canal secondaire est inactif et, lorsque le NAV pour le canal secondaire a expiré, sans utiliser le canal primaire, la station STA non AP étant configurée pour fonctionner sur la pluralité de canaux de la bande passante de fonctionnement du point d'accès, AP, où les circuits de traitement sont en outre configurés pour générer une signalisation à transmettre à la station STA afin d'identifier sur lequel des canaux secondaires la PPDU doit être reçue sans utiliser le canal primaire ; et
la mémoire pour stocker le NAV séparé pour chacun des canaux.

2. Appareil selon la revendication 1, dans lequel, lorsque le point d'accès AP est configuré pour fonctionner comme un point d'accès EHT et pour recevoir une transmission en liaison montante, les circuits de traitement étant destinés à coder une trame de déclenchement à transmettre à la STA sur un ou plusieurs des canaux secondaires lorsque les un ou plusieurs canaux secondaires sont inactifs et lorsque le NAV pour les un ou plusieurs canaux secondaires a expiré sans utilisation du canal primaire, la trame de déclenchement déclenchant la transmission en liaison montante par la STA sur les un ou plusieurs canaux secondaires.

3. Appareil selon la revendication 1 ou la revendication 2, dans lequel les circuits de traitement sont destinés à configurer en outre le point d'accès AP pour :
effectuer une détection de paquets simultanément sur au moins deux canaux secondaires ; et
générer une signalisation destinée à être transmise à la STA pour indiquer qu'une transmission de la PPDU est attendue sur un ou plusieurs canaux secondaires sans utilisation du canal primaire.

4. Appareil selon l'une quelconque des revendications 1 à 3, dans lequel les circuits de traitement sont en outre configurés pour :
différer une transmission sur un canal secondaire jusqu'à la fin d'une transmission intra-BSS détectée sur le canal primaire ; et
s'abstenir de différer une transmission sur un canal secondaire lorsqu'une transmission inter-BSS est détectée sur le canal primaire.

5. Appareil selon la revendication 4, dans lequel, lorsque la transmission détectée sur le canal primaire est une transmission intra-BSS, les circuits de traitement sont configurés pour limiter une durée de la PPDU jusqu'à la fin d'une durée de la transmission intra-BSS.

6. Appareil selon l'une quelconque des revendications précédentes, dans lequel, lors de la détection d'un paquet sur l'un quelconque des canaux pour lesquels la détection de paquets est effectuée, les circuits de traitement sont configurés pour :
lancer le décodage du paquet afin de déterminer si le paquet provient d'un ensemble de services de base, BSS, du point d'accès AP ou d'un BSS chevauchant, OBSS ;
mettre à jour le NAV pour un canal lorsque le paquet provient de l'OBSS et identifier le canal comme étant occupé ;
continuer à décoder le paquet si le paquet provient du BSS du point d'accès et identifier le canal comme étant occupé ; et
continuer à effectuer la détection de paquets pour les autres canaux pour lesquels la détection de paquets est effectuée.

7. Appareil selon la revendication 4, dans lequel, lorsque le point d'accès AP est configuré pour fonctionner comme un point d'accès AP hérité, les circuits de traitement sont configurés pour :
effectuer la détection de paquets simultanément sur le canal primaire et au moins l'un des canaux secondaires ;
coder la PPDU pour la transmission en liaison descendante vers la STA sur le canal primaire et sur un ou plusieurs des canaux secondaires lorsque le canal primaire est inactif et que les un ou plusieurs canaux secondaires sont inactifs ; et
s'abstenir de transmettre la PPDU sur l'un quelconque des canaux secondaires sans utiliser le canal primaire.

8. Appareil selon l'une quelconque des revendications précédentes, dans lequel le canal primaire est un canal de 20 MHz, et les un ou plusieurs canaux secondaires comprennent des canaux de 20 MHz et des canaux de 40 MHz, les canaux de 40 MHz comprenant deux canaux secondaires adjacents de 20 MHz.

9. Appareil selon la revendication 7, dans lequel, lorsqu'ils fonctionnent en tant que point d'accès EHT, pour une transmission en liaison descendante d'une PPDU de 40 MHz, les circuits de traitement sont configurés pour coder la PPDU de 40 MHz en vue de sa transmission sur deux canaux secondaires adjacents de 20 MHz sans utiliser le canal primaire ; et
dans lequel, lorsqu'ils fonctionnent en tant que point d'accès AP hérité, pour une transmission en liaison descendante d'une PPDU de 40 MHz, les circuits de traitement sont configurés pour coder la PPDU de 40 MHz en vue de sa transmission sur deux canaux adjacents de 20 MHz comprenant le canal primaire et un canal secondaire.

10. Support de stockage lisible par ordinateur qui transporte des instructions destinées à être exécutées par des circuits de traitement d'une station de point d'accès, AP, configurée pour fonctionner dans un réseau local sans fil à très haut débit, EHT, WLAN, l'AP pouvant être configuré par les circuits de traitement pour fonctionner en tant qu'AP hérité et pouvant être configurée par les circuits de traitement pour fonctionner en tant qu'AP EHT ;
les circuits de traitement étant destinés à configurer l'AP pour un fonctionnement sur une pluralité de canaux d'une bande passante de fonctionnement, les canaux comprenant un canal primaire et un ou plusieurs canaux secondaires ;
où, lorsque le point d'accès est configuré pour fonctionner en tant que point d'accès EHT, les circuits de traitement doivent :
maintenir un vecteur d'allocation de réseau séparé, NAV, pour chacun des canaux de la pluralité de canaux ;
effectuer une détection de paquets simultanément sur au moins deux des canaux comprenant au moins l'un des canaux secondaires afin de déterminer si chacun desdits au moins deux canaux sont inactifs ou occupés, où les au moins deux canaux sont inférieurs à tous les canaux de la bande passante de fonctionnement ; et
pour la transmission en liaison descendante lorsque le canal primaire est occupé, coder une unité de données de protocole, PPDU, de procédure de conformité de couche physique, PLCP, et amener la PLCP PPDU à être transmise dans la liaison descendante à une station, STA, non AP, sur l'un des canaux secondaires sur lequel la détection de paquets a été effectuée lorsque ledit canal secondaire est inactif et, lorsque le NAV pour le canal secondaire a expiré, sans utiliser le canal primaire, la station STA non AP étant configurée pour fonctionner sur la pluralité de canaux de la bande passante de fonctionnement du point d'accès, AP, où les circuits de traitement sont en outre configurés pour générer une signalisation à transmettre à la station STA afin d'identifier sur lequel des canaux secondaires la PPDU doit être reçue sans utiliser le canal primaire ;

11. Support de stockage lisible par ordinateur selon la revendication 10, dans lequel, lorsque le point d'accès AP est configuré pour fonctionner comme un point d'accès EHT et pour recevoir une transmission en liaison montante, les circuits de traitement étant destinés à coder une trame de déclenchement à transmettre à la STA sur un ou plusieurs des canaux secondaires lorsque les un ou plusieurs canaux secondaires sont inactifs et lorsque le NAV pour les un ou plusieurs canaux secondaires a expiré sans utilisation du canal primaire, la trame de déclenchement déclenchant la transmission en liaison montante par la STA sur les un ou plusieurs canaux secondaires.

12. Support de stockage lisible par ordinateur selon la revendication 10 ou la revendication 11, dans lequel les circuits de traitement sont destinés à configurer en outre le point d'accès AP pour :
effectuer une détection de paquets simultanément sur au moins deux canaux secondaires ; et générer une signalisation destinée à être transmise à la STA pour indiquer qu'une transmission de la PPDU est attendue sur un ou plusieurs canaux secondaires sans utilisation du canal primaire.

13. Support de stockage lisible par ordinateur selon l'une quelconque des revendications 10 à 12, dans lequel les circuits de traitement sont en outre configurés pour :
différer une transmission sur un canal secondaire jusqu'à la fin d'une transmission intra-BSS détectée sur le canal primaire ; et
s'abstenir de différer une transmission sur un canal secondaire lorsqu'une transmission inter-BSS est détectée sur le canal primaire, et
où, lorsque la transmission détectée sur le canal primaire est une transmission intra-BSS, les circuits de traitement sont configurés pour limiter une durée de la PPDU jusqu'à la fin d'une durée de la transmission intra-BSS.
